# EUROPÄISCHE PATENTANMELDUNG

(11) **EP 1 440 841 A2**
(43) Veröffentlichungstag der Anmeldung: **28.07.2004**
(21) Anmeldenummer: 03026451.9
(22) Anmeldetag: 20.11.2003
(51) Int. Cl.: B60N 2/68

(54) **Fahrgastsitz für Personenbeförderungsfahrzeuge**

(30) Priorität: 24.01.2003 DE 10302950
(71) Anmelder: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(57) **Zusammenfassung**

Ein Fahrgastsitz für Personenbeförderungsfahrzeuge, insbesondere für Busse und Bahnen, mit einem Rückenteil (1), welches einen Trägerrahmen (2,3a,3b) aufweist, an welchem einerseits eine Polsterung (4) befestigt ist, und andererseits ein Rückenteilabschluß (5) befestigt ist, welcher das Rückenteil (1) von hinten abschließt, und welcher Trägerrahmen (2,3a,3b) zwei Längsstreben (2) hat, zwischen welchen im oberen Bereich eine Querstrebe (3a,3b) angeordnet ist, ist dadurch gekennzeichnet, daß die Längsstreben (2) an ihren oberen Enden jeweils ein Winkelprofilteil (6) aufweisen, welche die Längsstreben (2) verlängern, wobei zwischen den sich gegenüberliegenden Schenkeln der Winkelprofilteile (6) die Querstrebe (3a,3b) angeordnet ist.

## Beschreibung

Die Erfindung betrifft einen Fahrgastsitz für Personenbeförderungsfahrzeuge, insbesondere für Busse und Bahnen, nach dem Oberbegriff des Anspruchs 1, mit einem Rückenteil, welches einen Trägerrahmen aufweist, an welchem einerseits eine Polsterung befestigt ist, und andererseits ein Rückenteilabschluß befestigt ist, welcher das Rückenteil von hinten abschließt, und welcher Trägerrahmen zwei Längsstreben hat, zwischen welchen im oberen Bereich eine Querstrebe angeordnet ist.

Ein derartiger Fahrgastsitz ist im Stand der Technik hinlänglich bekannt und wird regelmäßig in Fahrzeugen des öffentlichen Personennahverkehrs eingebaut. Bei dem bekannten Fahrgastsitz besteht der Trägerrahmen aus einem aus Rundrohr gebildeten Gestell. Dies ist zwar kostengünstig, hat jedoch einige Nachteile. So lassen sich insbesondere an dem waagerecht verlaufenden Teil des Rohrrahmens nur bedingt eine Kopfstütze oder ein Haltegriff anbringen. Denn der waagerecht verlaufende Teil des Rohrrahmens hat eine relativ geringe Verbiegungssteifigkeit.

Um hiervon Abhilfe zu schaffen, könnte der waagerecht verlaufende Teil des Rohrrahmens durch ein Vierkantrohr ersetzt werden. Dies hat jedoch den Nachteil, daß es aufwendig ist, es mit den beiden Längsstreben des Trägerrahmens zu verschweißen. Denn um eine zuverlässige Schweißnaht zu erhalten, müßten in das Vierkäntrohr an seinen Stimseiten halbrunde Ausnehmungen eingebracht werden, in welche sich die zylinderförmigen Längsstreben des Trägerrahmens einschmiegen. Dies ist sehr aufwendig und wirkt sich nachteilig auf die Kosten aus.

Es ist Aufgabe der Erfindung, einen eingangs genannten Fahrgastsitz derart auszubilden, daß er bei kostengünstiger Herstellung eine hohe Stabilität im Bereich der Querstrebe hat.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere für Busse und Bahnen, mit einem Rückenteil, welches einen Trägerrahmen aufweist, an welchem einerseits eine Polsterung befestigt ist, und andererseits ein Rückenteilabschluß befestigt ist, welcher das Rückenteil von hinten abschließt, und welcher Trägerrahmen zwei Längsstreben hat, zwischen welchen im oberen Bereich eine Querstrebe angeordnet ist, dadurch gekennzeichnet, daß die Längsstreben an ihren oberen Enden jeweils ein Winkelprofilteil aufweisen, welche die Längsstreben verlängern, wobei zwischen den sich gegenüberliegenden Schenkeln der Winkelprofilteile die Querstrebe angeordnet ist.

Dadurch, daß die Längsstreben an ihren oberen Enden jeweils ein Winkelprofilteil aufweisen, welche die Längsstreben verlängern, läßt sich auf einfache Weise eine Querstrebe zwischen die beiden sich gegenüberliegenden Schenkel der Winkelprofilteile befestigen. Denn, da sich nunmehr im oberen Bereich der Längsstreben die beiden flachen Schenkel der Winkelprofilteile gegenüberstehen, läßt sich problemlos eine Querstrebe aus einem Vierkantholm an die Schenkel anschweißen, ohne daß die Stimseiten des Vierkantholms besonders bearbeitet werden müssen. Die Stimseiten des Vierkantholms können gerade Schnittflächen sein.

Die Winkelprofilteile ihrerseits lassen sich problemlos an die zylinderförmigen Längsstreben des Trägerrahmens anschweißen.

Durch die Winkelprofilteile wird somit auf einfache Weise erreicht, daß zwischen die beiden Längsstreben des Trägerrahmens auf einfache Weise ein Kastenprofilteil mit hoher Festigkeit angeordnet werden kann. Darüber hinaus wird durch die Anordnung der Winkelprofilteile an den oberen Enden der Längsstreben in vorteilhafter Weise ein Raum gebildet, welcher für die Befestigung beispielsweise eines Handgriffes oder des Rückenteilabschlusses genutzt werden kann.

So weisen bei einer besonderen Ausführungsform der Erfindung die Winkelprofilteile in ihren Schenkeln, an denen die Querstrebe befestigt ist, erste Befestigungselemente auf. Mittels dieser Befestigungselemente, welche als Gewindebohrungen ausgebildet sein können, lassen sich an den Winkelprofilteilen und damit am Trägerrahmen auf einfache Weise beispielsweise Laschen befestigen, welche Befestigungselemente eines Handgriffes bilden. Somit kann mittels der Winkelprofilteile ein Handgriff auf einfache Weise mit dem Trägerrahmen fest verbunden werden.

Bei einer weiteren besonderen Ausführungsform ist vorgesehen, daß die Winkelprofilteile an ihren sich nicht gegenüberstehenden Schenkeln zweite Befestigungselemente aufweisen. Mittels der zweiten Befestigungselemente, welche als Durchgangsbohrungen ausgebildet sein können, läßt sich auf einfache Weise der Rükkenteilabschluß mit dem Trägerrahmen verbinden. Hierzu muß der Rückenteilabschluß lediglich Elemente aufweisen, in welche beispielsweise Schrauben einschraubbar sind. Besonders vorteilhaft hierbei ist es, daß die derart vorgenommene Befestigung des Rückenteilabschlusses von außen nicht mehr sichtbar ist.

Als besonders vorteilhaft hat sich eine Ausführungsform der Erfindung herausgestellt, bei der die Querstrebe aus zwei übereinander angeordneten U-Profilteilen besteht, deren Öffnungen nach unten gerichtet sind. Durch die beiden übereinander angeordneten U-Profilteile wird in etwa die Stabilität eines Kastenprofils erreicht. Dadurch, daß U-Profilteile genommen werden, lassen sich in die Stege auf einfache Weise beispielsweise durch Stanzen Löcher einbringen. Dies wirkt sich sehr vorteilhaft auf die Herstellungskosten aus. In die Löcher der U-Profilteile lassen sich beispielsweise Befestigungsstreben einer Kopfstütze stecken, so daß der Fahrgastsitz problemlos mit einer Kopfstütze versehen werden kann.

Dadurch, daß die Öffnungen der U-Profilteile nach unten gerichtet sind, wird in vorteilhafter Weise eine von unten zugängliche Öffnung bereitgestellt, in die sich Mittel zur Befestigung der Polsterung einbringen lassen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Anordnung eines erfindungsgemäß ausgebildeten Fahrgastsitzes ohne Polsterung und ohne Rückenteilabschluß in perspektivischer Darstellung von hinten,
- Figur 2: den oberen Bereich des in Figur 1 dargestellten Fahrgastsitzes mit einem Haltegriff,
- Figur 3: den oberen Bereich des in Figur 1 dargestellten Fahrgastsitzes mit einer Kopfstütze,
- Figur 4: den oberen Bereich des in Figur 1 dargestellten Fahrgastsitzes mit Rückenteilabschluß in perspektivischer Darstellung von vome und
- Figur 5: den in Figur 1 dargestellten Fahrgastsitz mit Rückenteilabschluß, Polsterung und Haltegriff in perspektivischer Darstellung von vome.

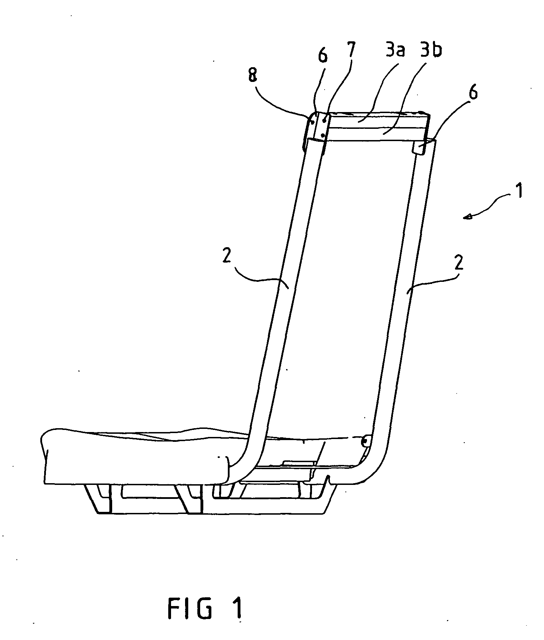

Wie insbesondere Figur 1 entnommen werden kann, weist ein Fahrgastsitz ein Rükkenteil 1 auf, welches einen Trägerrahmen hat, welcher zwei Längsstreben 2 aufweist, an welchen an den oberen Enden Winkelprofilteile 6 angeschweißt sind. Die Winkelprofilteile 6 sind derart an die Längsstreben 2 angeschweißt, daß sie die Längsstreben 2 verlängern und sich zwei Schenkel flach gegenüberstehen. Zwischen den sich gegenüberstehenden Schenkeln der Winkelprofilteile 6 ist eine Querstrebe angeordnet, welche aus zwei übereinander angeordneten U-Profilteilen 3a, 3b besteht. Die Öffnungen der U-Profilteile 3a, 3b sind nach unten gerichtet. Die beiden U-Profilteile sind an ihren Längsseiten miteinander verschweißt. Des weiteren sind die beiden U-Profilteile 3a, 3b an die sich gegenüberstehenden Schenkel der Winkelprofilteile 6 angeschweißt. Hierdurch wird ein äußerst stabiler Trägerrahmen gebildet.

Die beiden sich gegenüberstehenden Schenkel der Winkelprofilteile 6 weisen jeweils zwei Gewindebohrungen 7 auf. Die anderen Schenkel weisen eine Durchgangsbohrung 8 auf.

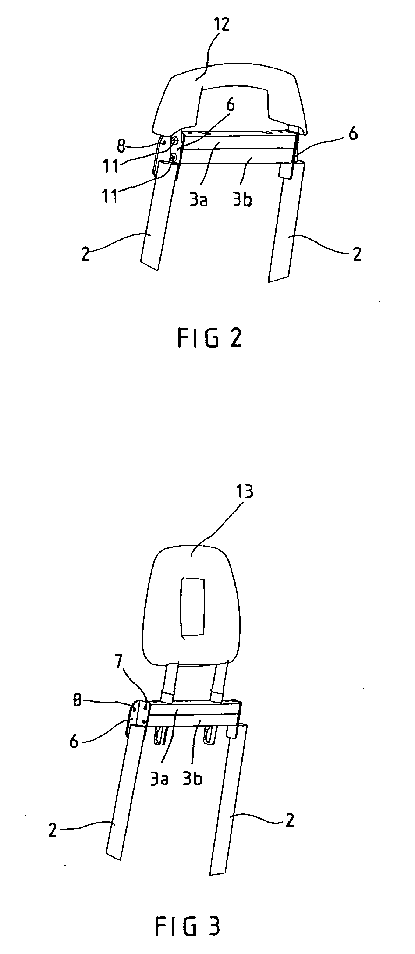

Wie insbesondere Figur 2 entnommen werden kann, läßt sich ein Handgriff 12, welcher Befestigungslaschen 12a aufweist, mittels Schrauben 11 an den Winkelprofilteilen 6 befestigen.

Wie insbesondere Figur 3 entnommen werden kann, kann das Rückenteil 1 des Fahrgastsitzes statt mit einem Haltegriff mit einer Kopfstütze 13 versehen werden. Hierzu sind in den Stegen der U-Profilteile 3a, 3b Öffnungen gestanzt worden, durch die sich die Befestigungsstreben der Kopfstütze 13 erstrecken. Dadurch, daß die Querstrebe 3a, 3b aus U-Profilteilen 3a, 3b besteht, besitzt die Querstrebe 3a, 3b eine hohe Verbindungssteifigkeit.

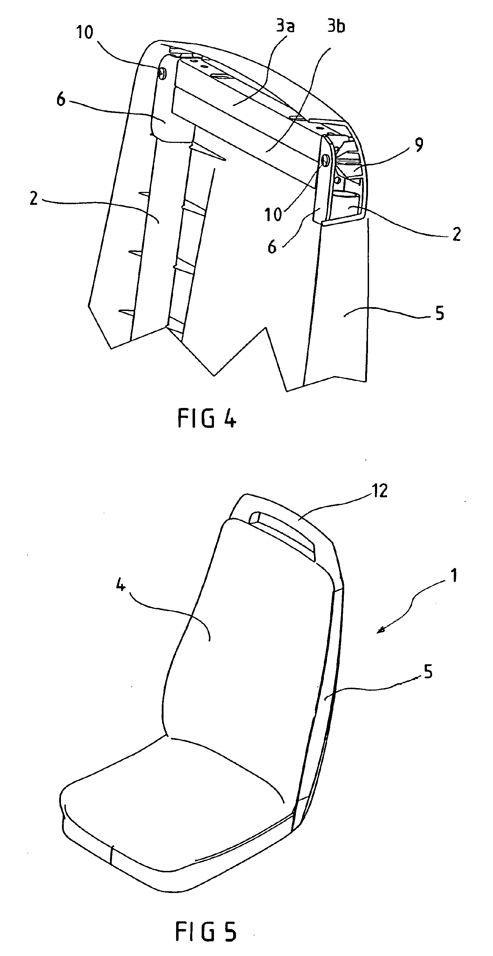

Wie insbesondere Figur 4 entnommen werden kann, läßt sich ein Rückenteilabschluß 5, welcher als sogenannter Dom bezeichnete Elemente 9 aufweist, auf einfache Weise an dem Trägerrahmen befestigen. Hierzu brauchen lediglich Schrauben 10 durch die in den nicht gegenüberstehenden Schenkeln der Winkelprofilteile 6 ausgebildeten Öffnungen 8 gesteckt und in in den Elementen 9 ausgebildete Öffnungen eingeschraubt zu werden. Da die Befestigung des Rückenteilabschlusses 5 von vome erfolgt, weist der Rückenteilabschluß 5 keine sichtbaren Befestigungen auf.

Wie Figur 5 entnommen werden kann, ist das Rückenteil 1 des Fahrgastsitzes von vome mit einer Polsterung 4 versehen, welche in Figur 5 nicht sichtbare Befestigungsmittel aufweist, welche von unten in die Öffnungen des unteren Profilteils 3b eingesteckt sind.

## Patentansprüche

1. Fahrgastsitz für Personenbeförderungsfahrzeuge, insbesondere für Busse und Bahnen, mit einem Rückenteil (1), welches einen Trägerrahmen (2, 3a, 3b) aufweist, an welchem einerseits eine Polsterung (4) befestigt ist, und andererseits ein Rükkenteilabschluß (5) befestigt ist, welcher das Rückenteil (1) von hinten abschließt, und welcher Trägerrahmen (2, 3a, 3b) zwei Längsstreben (2) hat, zwischen welchen im oberen Bereich eine Querstrebe (3a, 3b) angeordnet ist,
**dadurch gekennzeichnet,**
**daß** die Längsstreben (2) an ihren oberen Enden jeweils ein Winkelprofilteil (6) aufweisen, welche die Längsstreben (2) verlängern, wobei zwischen den sich gegenüberliegenden Schenkeln der Winkelprofilteile (6) die Querstrebe (3a, 3b) angeordnet ist.

2. Fahrgastsitz nach Anspruch 1,
**dadurch gekennzeichnet,**
**daß** die Winkelprofilteile (6) in ihren Schenkeln, an denen die Querstrebe (3a, 3b) befestigt ist, erste Befestigungselemente (7) aufweisen.

3. Fahrgastsitz nach Anspruch 1 oder 2,
**dadurch gekennzeichnet,**
**daß** die Winkelprofilteile (6) an ihren sich nicht gegenüberstehenden Schenkeln zweite Befestigungselemente (8) aufweisen.

4. Fahrgastsitz nach einem der Ansprüche 1 bis 3,
**dadurch gekennzeichnet,**
**daß** die Querstrebe (3a, 3b) aus zwei übereinander angeordneten U-Profilteilen besteht, deren Öffnungen nach unten gerichtet sind.

5. Fahrgastsitz nach einem der Ansprüche 1 bis 4,
**dadurch gekennzeichnet,**
**daß** die zweiten Befestigungselemente (8) Öffnungen sind und der Rückenteilabschluß (5) Elemente (9) aufweist, mit welchen sich durch die Öffnungen (8) erstrekkende Befestigungsmittel (10) verbindbar sind.
